# EUROPEAN PATENT APPLICATION

(11) **EP 1 802 101 A2**
(43) Date of publication of application: **27.06.2007**
(21) Application number: 06026491.8
(22) Date of filing: 20.12.2006
(51) Int. Cl.: H04N 5/225

(54) **Electronic apparatus**

(30) Priority: 22.12.2005 JP 2005370496
(71) Applicant: SONY CORPORATION, Tokyo (JP)
(72) Inventor: Hosoya, Naoto, Shinagawa-ku,Tokyo (JP); Koretsune, Akihito, Shinagawa-ku,Tokyo (JP); Fukuoka, Keikaku, Shinagawa-ku,Tokyo (JP)
(74) Representative: Müller - Hoffmann & Partner

(57) **Abstract**

An electronic apparatus includes an apparatus body having a storage medium insertion slot to insert and remove an information storage medium, and a display unit supported by the apparatus body in a turnable manner, being capable of opening and closing the storage medium insertion slot. The display unit includes a flat panel capable of displaying image information, and a panel case having a window to expose a display surface of the flat panel and being supported by the apparatus body in a turnable manner. Part of a frame portion surrounding the window of the panel case is disposed to overlap at least part of the storage medium insertion slot such that the information storage medium inserted through the storage medium insertion slot is prevented from being in contact with the display surface of the flat panel, when the display unit being brought into contact with the apparatus body.

## Description

### CROSS REFERENCES TO RELATED APPLICATIONS

The present invention contains subject matter related to Japanese Patent Application JP 2005-370496 filed in the Japanese Patent Office on December 22, 2005, the entire contents of which being incorporated herein by reference.

### BACKGROUND OF THE INVENTION

### Field of the Invention:

The present invention relates to an electronic apparatus such as an imaging apparatus including a video camera and a still camera, a personal computer, a mobile phone unit unit, an electronic dictionary and others. Particularly, the present invention relates to an electronic apparatus including an apparatus body having a storage medium insertion slot of a storage medium storing portion where an information storage medium is detachably mounted as an external memory unit, in which the storage medium insertion slot can be opened and closed by means of a display unit supported by the apparatus body in a turnable manner.

### Description of the Related Art:

Japanese Unexamined Patent Application Publication No. 2001-53994 discloses an electronic apparatus of this kind in related art. In this patent reference, there is a description related to a card type recording apparatus for a video camera, where still image data and the like of captured images can be recorded on and reproduced from a card type recording medium. The video camera described in this patent reference includes an imaging portion, a viewfinder portion, a mechanical deck portion, and an opening and closing type monitor portion. The viewfinder portion is disposed at the rear of the imaging portion. The mechanical deck portion is disposed at a lower part of the imaging portion and viewfinder portion, in which captured images and the like are recorded on and reproduced from a main recording medium such as a tape-shaped recording medium or a disk-shaped recording medium. The opening and closing type monitor portion is disposed on one side of the mechanical deck portion. In this video camera, the card type recording apparatus, in which the captured images and the like are recorded on and reproduced from the card type recording medium, is disposed approximately parallel with the mechanical deck portion and monitor portion in a space provided to a lower part of the imaging portion and viewfinder portion and surrounded with the mechanical deck portion and monitor portion.

According to the video camera having the above-described configuration, such effects as described below can be obtained. A projecting portion on the side opposite to the monitor portion of the mechanical deck portion, which has been necessary to store a card type recording-reproducing apparatus, can be removed. Hence, the width of a video camera can be reduced even if a large aperture lens is mounted correspondingly to an increased number of pixels in a solid-state imaging device of an imager portion. Accordingly, a thin and highly sensitive video camera can be obtained (paragraph [0037] of the specification).

In addition, Japanese Unexamined Patent Application Publication No. 2000-322518 discloses another example of an electronic apparatus of this kind in related art. In this patent reference, there is a description related to an electronic apparatus having an opening and closing door for opening and closing a recording medium insertion slot where an information recording medium is inserted. The electronic apparatus described in this patent reference includes an apparatus body provided with the recording medium insertion slot where the information recording medium is inserted and removed, and the opening and closing door supported by the apparatus body in a turnable manner to open and close the recording medium insertion slot. In this electronic apparatus, the opening and closing door is attached such that a straight line connecting the center of turning movement of the opening and closing door to a contact portion in contact with the apparatus body is inclined against an opening surface of the recording medium insertion slot.

According to the electronic apparatus having the above-described configuration, in the case where an outer edge of the recording medium insertion slot is bent inward by external force, the opening and closing door may be turned backward by force given from a contacting surface to the opening and closing door, thereby preventing the opening and closing door from being broken (see paragraph [0068] of the specification).

However, in the video cameras described in both the patent references, the recording medium insertion slot is arranged in the rear surface of the video camera and an opening portion thereof is closed with an opening and closing lid. Therefore, there is recognized such a disadvantage that an appearance thereof may give an impression of being not simplified in design, since the recording medium insertion slot is always visible as part of an external appearance of the video camera. Further, since a lot of components are required for providing the opening and closing lid such as a lid, a turnable shaft, a coil spring and the like, it is difficult to reduce costs from a viewpoint of workability and the like at the time of assembly.

Here, a display unit supported by an apparatus body in a turnable manner has been provided in a video camera in related art. The display unit is regarded as an opening and closing lid, and a recording medium insertion slot may be disposed in an area of this opening and closing lid. However, in the case where the recording medium insertion slot is disposed inside a frame portion of a panel case that holds a flat panel without paying much attention to the position of the recording medium insertion slot, the information recording medium may be prevented from being inserted up to a predetermined position and a rear portion thereof may protrude due to an erroneous insertion, an unfinished insertion and the like, for example. If the display unit is closed under such condition, a display surface of the flat panel may come in contact with the information recording medium and the display surface may be damaged by a collision at that time.

### SUMMARY OF THE INVENTION

An electronic apparatus in related art is configured to have a recording medium insertion slot closed by means of an opening and closing lid, and therefore not only an external appearance of a video camera gives an impression of being not simplified in design, but also production costs may increase since a lot of components are required to provide the opening and closing lid. Further, a display unit may be used as the opening and closing lid, however, in the case where the information recording medium is not inserted up to a predetermined position and the rear portion thereof protrudes due to the erroneous insertion, unfinished insertion and the like, there is a possibility of the display surface of the flat panel being damaged by the projected portion.

An electronic apparatus according to an embodiment of the present invention includes an apparatus body having a storage medium insertion slot to insert and remove an information storage medium and a display unit supported by the apparatus body in a turnable manner, being capable of opening and closing the storage medium insertion slot. The display unit has a flat panel capable of displaying image information and a panel case having a window to expose a display surface of the flat panel and being supported by the apparatus body in a turnable manner. Further, part of a frame portion surrounding the window of the panel case is disposed to overlap at least part of the storage medium insertion slot such that the information storage medium inserted from the storage medium insertion slot is prevented from being in contact with the display surface of the flat panel, when the display unit is brought into contact with the apparatus body.

In the electronic apparatus according to the embodiment of the present invention, since the storage medium insertion slot is disposed at a portion covered with the display unit of the apparatus body, dirt and dust can be prevented from entering the apparatus body from the storage medium insertion slot by using the display unit as the opening and closing lid. Moreover, since the electronic apparatus is configured such that part of the frame portion of the panel case of the display unit is overlapped with at least part of the storage medium insertion slot, the information storage medium can be prevented from being in contact with the display surface of the flat panel. Therefore, the flat panel can be prevented from being damaged by the information storage medium if the display unit is closed by mistake in the state where the information storage medium is projected from the storage medium insertion slot.

### BRIEF DESCRIPTION OF THE DRAWINGS

FIG. 1 is a perspective view in which a digital video camera (imaging apparatus) showing a first embodiment of an electronic apparatus according to the present invention is viewed from the rear side in a state where a display unit is open;
FIG. 2 is a perspective view in which the digital video camera showing the first embodiment of the electronic apparatus according to the present invention is viewed from the rear side in a state where the display unit is closed;
FIG. 3 is a perspective view in which a display unit side of the digital video camera showing the first embodiment of the electronic apparatus according to the present invention is viewed from the front side;
FIG. 4 is a perspective view in which a mechanical deck side of the digital video camera showing the first embodiment of the electronic apparatus according to the present invention is viewed from the front side;
FIG. 5 is a side view on the display unit side of the digital video camera showing the first embodiment of the electronic apparatus according to the present invention; and
FIG. 6 is a partially cross-sectional plan view of the digital video camera showing the first embodiment of the electronic apparatus according to the present invention.

### DESCRIPTION OF THE PREFERRED EMBODIMENTS

An electronic apparatus is provided in which a storage medium insertion slot is disposed inside a portion covered with a display unit of an apparatus body, and part of a frame portion of a panel case of the display unit is overlapped with at least part of the storage medium insertion slot. Hence, dirt and dust can be prevented from entering the electronic apparatus and a flat panel is prevented from being damaged by an information storage medium with a simplified structure.

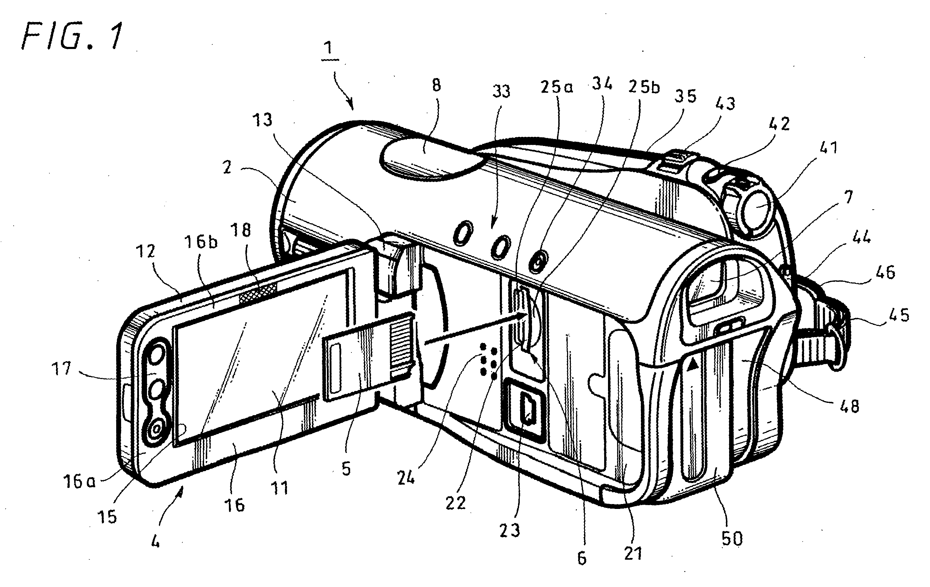

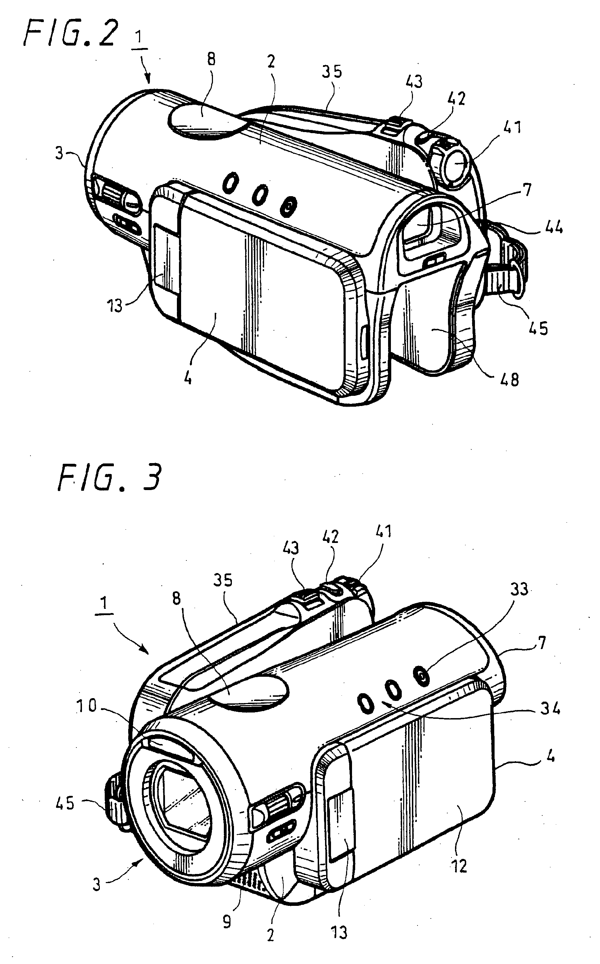

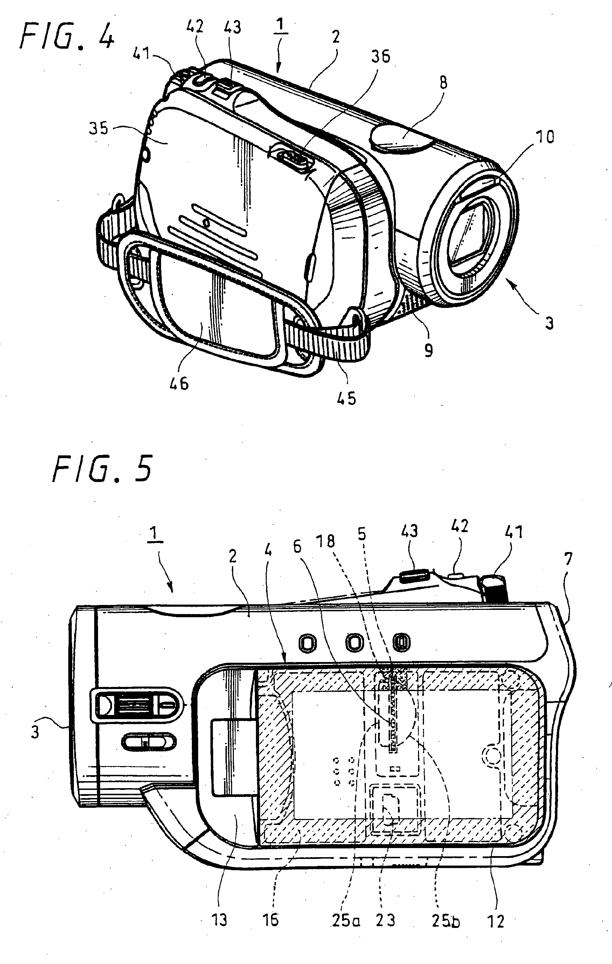

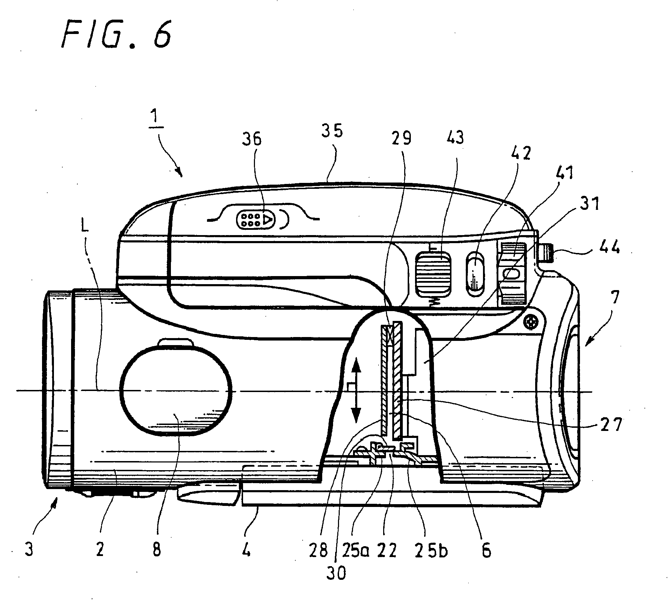

FIGS. 1 through 6 are diagrams showing an embodiment of the present invention. Specifically, FIG. 1 is a perspective view in which a digital video camera showing a first embodiment of an electronic apparatus according to the present invention is viewed from a rear side in a state where a display unit is open. FIG. 2 is a perspective view in which the same camera is viewed from the rear side in a state where the display unit is closed. Similarly, FIG. 3 is a perspective view in which a display unit side is viewed from a front side. Similarly, FIG. 4 is a perspective view in which a mechanical deck side is viewed from the front side. Further, FIG. 5 is a side view on the display unit side, and FIG. 6 is a plan view showing a partial cross-section.

### [First Embodiment]

FIG. 1 through FIG. 6 are diagrams of a digital video camera 1 that is a specific example of an imaging apparatus showing a first embodiment of an electronic apparatus according to the present invention. This digital video camera 1 uses two kinds of information storage media to selectively record information signals on respective information storage media and reproduce the recorded information.

Regarding the two information storage media used in the digital video camera 1, the first one is a tape-shaped storage medium (such as a tape cassette) that is a magnetic tape housed in a cassette case, and the second one is a semiconductor memory medium (such as a memory card) in which LSI such as a CPU and memory is incorporated in a plastic card. The digital video camera 1 selectively uses those information storage media. Optical images are converted into electrical signals by a CCD (solid-state imaging device) showing a specific example of an imager, and image information thereof can be recorded on the tape-shaped storage medium and semiconductor memory medium and can be displayed on a display unit made of a flat panel such as a liquid crystal display.

In such information storage media, the medium intended in the embodiment of the present invention is the semiconductor memory medium, and it should be noted that the other memory medium is not limited to the tape-shaped storage medium in this embodiment. It should be appreciated that a disk-shaped storage medium such as an optical disk, a magneto-optical disk, a magnetic disk, and others can be used as the other information storage medium, for example, and another semiconductor memory medium may also be used similarly to the intended information storage medium.

The digital video camera 1 is configured to have an external case 2, a tape drive unit (mechanical deck), a control circuit, a lens unit 3, a display unit 4, a storage medium storing portion 6, and the like. The case 2 is a specific example of an apparatus body. The tape drive unit drives and feeds a magnetic tape in the tape cassette housed in the external case 2 and mounted in a freely detachable manner as the first information storage medium to record (write) and reproduce (read) information signals. The control circuit drives and controls the tape drive unit. The lens unit 3 captures images of an object as light to be led to the CCD. The display unit 4 is attached to the external case 2 in a turnable manner. In the storage medium storing portion 6, a semiconductor memory medium 5 (such as a memory card) is detachably mounted to be used as a second external memory unit.

As shown in FIGS. 1 through 6, the external case 2 is made of a hollow case having an approximately cylindrical shape and is used in such a state that an axis direction is set to an anterior-posterior direction. The lens unit 3 having an approximately similar diameter as that of the external case is arranged in a front portion of the external case 2. The lens unit 3 is attached to the external case 2 in a state in which an optical axis of a lens system thereof is directed in a horizontal direction. The CCD is attached to a rear portion of the lens unit 3 inside the external case 2. Further, a viewfinder unit 7 is arranged behind the lens unit 3.

An opening portion to expose an accessory shoe where an accessory such as a video light and an external microphone is mounted in a freely detachable manner is provided in an upper part of the external case 2. The accessory shoe is disposed on an upper part of the lens unit 3 and is normally covered with a detachable shoe cap 8 that opens and closes the opening portion. Further, a stereo microphone 9 is incorporated in a lower part of the front surface of the external case 2. Further, a light emitting portion 10 of a flash unit is arranged in an upper part of the front surface of the lens unit 3.

As shown in FIGS. 1 through 3 and other figures, the display unit 4 is attached to one side surface of the external case 2, being capable of changing a posture. The display unit 4 includes a flat panel 11 made of a flat board-shaped liquid crystal display or the like, a panel case 12 in which the flat panel 11 is housed, and a panel support portion 13 that supports the panel case 12 to be capable of changing a posture with respect to the external case 2. The panel case 12 is made of a flat case formed into an approximately rectangular parallelepiped, and a window 15 to expose a display surface of the flat panel 11 is provided on a surface facing one side surface of the external case 2. The window 15 is made of a rectangular through-hole extending in a lengthwise direction, and a quadrangular frame portion 16 each side of which has a suitable width is formed on four sides surrounding the window 15.

Furthermore, a plurality of control buttons 17 to operate the flat panel 11 are arranged in an outer frame section 16a, of the frame portion 16 in the panel case 12, positioned at an opposite side to the panel support portion 13. Part of an upper frame section 16b of the frame portion 16 in the panel case 12 constitutes a shield portion 18 to close part of a later-described storage medium insertion slot.

Further, the panel support portion 13 includes a horizontal turning portion and an anterior-posterior turning portion. The horizontal turning portion causes the panel case 12 to be turnable in a horizontal direction by approximately 90° with a vertical axis as the center of turning movement. The anterior-posterior turning portion causes the panel case 12 to be turnable in an anterior-posterior direction by approximately 180° with a horizontal axis as the center of turning movement and, in addition, causes the panel case 12 to be turnable in an upper-lower direction by approximately 90°, thereby causing the panel case 12 to be turnable by approximately 270° in total.

As a result, the display unit 4 can be brought into the following states: a state of being housed on the side surface of the external case 2 as shown in FIG. 3; and a state of the flat panel 11 facing backward by turning the panel case 12 in the horizontal direction by 90° as shown in FIG. 1. Further, the display unit 4 can be brought into: a state of the flat panel 11 facing forward by turning the panel case 12 by 180° from the above state; a state of the flat panel 11 facing downward by further turning backward by 90° from the state of the flat panel 11 facing backward; and an arbitrary state (posture) in the middle position between those states.

A housing concave portion 21 that is a dent to hold a part of the display unit 4 on the side of the flat panel 11 is provided in the side surface of the external case 2 that is opened and closed by the display unit 4. The housing concave portion 21 is formed into a shape corresponding to the outer shape of the panel case 12, and a storage medium insertion slot 22 for the storage medium storing portion 6 and a USB connector 23 for electrically connecting to an external peripheral device are provided in approximately the center thereof. Further, a plurality of transmission holes 24 to emit sounds from a built-in speaker unit are provided in the vicinity of the storage medium insertion slot 22 and the like.

In the housing concave portion 21 of the external case 2, the storage medium insertion slot 22 and USB connector 23 are disposed at a predetermined interval in the upper-lower direction. The storage medium insertion slot 22 is formed as a slit hole having a size corresponding to the size of the information storage medium 5 to be used and is provided such that a lengthwise direction thereof is directed in the upper-lower direction. Concave portions 25a and 25b are respectively provided on both the anterior and posterior sides of the storage medium insertion slot 22 so that the information storage medium 5 can be inserted deeper than the side surface of the external case 2. The anterior side concave portion 25a is formed into a rectangle and the posterior side concave portion 25b is formed into a three-dimensional shape in which a plane is formed into a semi-circle, and is also concaved into a semi-circle in the depth direction so that fingertips can be inserted into a certain depth.

An opening and closing door 30 is disposed inside the storage medium insertion slot 22, and the storage medium storing portion 6 is provided further inside. The opening and closing door 30 is made of a reed-shaped member capable of closing the storage medium insertion slot 22, and a turnable shaft whose axis direction is set in the upper-lower direction is provided on one side in the width direction thereof. A coil spring is attached to the turnable shaft, and the opening and closing door 30 is always biased toward a direction to close the storage medium insertion slot 22 by spring force of this coil spring. The information storage medium 5 can be inserted by opening the opening and closing door 30 against the spring force of this coil spring.

The storage medium storing portion 6 has a storage medium circuit substrate 27 in which an electronic circuit for the information storage medium 5 is formed, and a holder plate 28 fixed on one surface of this storage medium circuit substrate 27. A space portion having a size and shape corresponding to the information storage medium 5 is formed between the holder plate 28 and the circuit substrate 27, and the information storage medium 5 is inserted into this space portion. Further, a push-push mechanism 29 is provided in the storage medium storing portion 6 so that mounting operation (lock operation) and removing operation (lock release operation) of the information storage medium 5 can be executed alternately and repeatedly by repeatedly pushing the inserted information storage medium 5.

As shown in FIG. 6, the storage medium storing portion 6 is configured to extend in a direction approximately vertical to the side surface of the external case 2 and to intersect an optical axis L of the lens unit 3 approximately vertically. The storage medium storing portion 6 is fixed on the inner surface of the external case 2 using a mounting bracket 31 and is supported at a predetermined position. In this embodiment, the storage medium storing portion 6 extends in the direction being approximately vertical to the side surface of the external case 2 as a state of the storage medium storing portion 6 being attached. However, an embodiment of the present invention is not limited thereto and the storage medium storing portion 6 may be configured such that the information storage medium 5 is held obliquely by providing the storage medium storing portion 6 inclined at an appropriate angle with the side surface of the external case 2, for example.

Further, a position where the storage medium storing portion 6 is provided is not limited to this embodiment. The storing portion 6 can be provided on the upper surface, front surface, or at another appropriate position on the external case 2, where the display unit 4 is being attached. It should be noted that an operation portion 33 having a plurality of control buttons and a connection terminal 34 connected to external electronic equipment and electronic devices are provided on the upper side of the housing concave portion 21 of the external case 2 as shown in FIG. 1 and other figures.

In addition, a grip portion 35 to grip the external case 2 is provided on a side surface of the external case 2 on the opposite side to the display unit 4 as shown in FIG. 4. This grip portion 35 also serves as a member covering the mechanical deck (not illustrated) held inside. A cassette insertion slot of the built-in mechanical deck is exposed by opening an upper part of the grip portion 35 to the out side, thereby mounting and removing a tape cassette. An operation of opening the grip portion 35 is performed such that a lock is released by a backward sliding operation of a lock release button 36 provided in the upper part of the grip portion 35 and the grip portion 35 is opened laterally by manual operation (or, automatic operation) after the lock is released. On the other hand, operation of closing the grip portion 35 is performed by pushing the opened grip portion 35 to the inside until being pushed into a predetermined position.

A power switch 41 also serving as a mode selection switch, a shutter button 42 to capture still images, and a zoom button 43 to sequentially magnify (telescopic mode) or reduce (wide mode) an image within a predetermined range are provided on the upper rear side of the grip portion 35. The power switch 41 has the function of switching ON/OFF the power by a turning operation and the function of switching a mode among a plurality of functional modes repeatedly by performing the turning operation in the ON state of power. A recording button 44 to capture moving images is provided below the power switch 41.

Further, a hand belt 45 is attached to a lower part of the grip portion 35 to form a bridge in the anterior-posterior direction, and a hand pad 46 is attached to the hand belt 45. The hand belt 45 and hand pad 46 are used to support a user's hand grasping the grip portion 35 of the external case 2, to prevent the digital video camera 1 from being dropped, and so on.

As shown in FIGS. 1 and 2, a battery storing portion 48, in which a battery unit 50 of a portable power source is detachably mounted, is provided in the rear surface of the external case 2. The battery storing portion 48 is a concave portion continuous from the center toward a lower surface in the rear surface of the external case 2. The viewfinder unit 7 shaped as a half-moon dome is disposed on the upper side of the battery storing portion 4B.

The battery storing portion 48 includes a rectangular concave portion having a size approximately equivalent to the battery unit 50, and four engaging claws (not illustrated) capable of sliding in the upper-lower direction are provided in the concave portion. The battery unit 50 is detachably held in the battery storing portion 48 using the four engaging claws.

The digital video camera 1 having such configuration is used as follows, for example. In the case where the semiconductor memory medium 5 is used as the information storage medium, first, the storage medium insertion slot 22 is made open by laterally turning the display unit 4 as shown in FIG. 1. The inserted side of the semiconductor memory medium 5 is faced to the storage medium insertion slot 22 and the semiconductor memory medium 5 is inserted straight in such state. A head portion of the semiconductor memory medium 5 comes in contact with the push-push mechanism 29 disposed in the storage medium storing portion 6 by inserting the semiconductor memory medium 5 to a certain position. In this state, the rear portion of the semiconductor memory medium 5 slightly projects from the storage medium insertion slot 22.

In the above-described state, it is preferable that a contact point of a connection terminal of the semiconductor memory medium 5 and a contact point of a connection terminal on the apparatus body side of the digital video camera 1 come in contact with each other to be in an electrically connected relation. With such structure, the digital video camera 1 can be used without causing any trouble in such unfinished mounting state of the semiconductor memory medium 5, even if a user uses the digital video camera 1 (for example, records or reproduces still images and moving images, records or reproduces electronic information such as music, and the like), for example.

After being inserted to a certain position, the semiconductor memory medium 5 is further inserted to a predetermined position by pushing against reaction force from the push-push mechanism 29. As a result, the semiconductor memory medium 5 is locked at the predetermined position in the storage medium storing portion 6, and the contact point of the connection terminal of the semiconductor memory medium 5 and the contact point of the connection terminal on the apparatus body side contact with each other and are electrically connected. Accordingly, the digital video camera 1 can be used (for example, recording or reproducing still images and moving images, recording or reproducing electronic information such as music, and the like can be performed) in a state of secured electrical connection.

It is conceivable that the user closes the display unit 4 by mistake against such normal working process (sequence), while the rear part (back portion) of the semiconductor memory medium 5 still projecting from the storage medium insertion slot 22, for example. However, according to this embodiment, also in such case, the back portion of the semiconductor memory medium 5 comes in contact with the frame portion 16 of the panel case 12, particularly, with the shield portion 18 in the upper frame section 16b (see FIG. 5). Therefore, the back portion of the semiconductor memory medium 5 can be prevented from being in contact with the display surface of the flat panel 11, thereby preventing the flat panel 11 from being damaged by the back portion.

In addition, there is conceivable such a case that the lock of the semiconductor memory medium 5 is released by vibration, rattle, and the like during transportation, for example, in the state of the semiconductor memory medium 5 being inserted (stored) in the storage medium storing portion 6 under a normal condition. Also in that case of the semiconductor memory medium 5 slipping off, there is the frame portion 16 of the panel case 12 adjacently provided at the back on a moving trajectory of the semiconductor memory medium 5. Accordingly, the semiconductor memory medium 5 is prevented from slipping off, thereby the state of electrical connection between the semiconductor memory medium 5 and the digital video camera 1 being maintained, since the back portion of the semiconductor memory medium 5 is pressed by the frame portion 16 of the panel case 12. As a result, troubles such as dropping and losing the semiconductor memory medium 5 due to slipping off, missing an opportunity of capturing images due to failure in electrical connection, and the like can be prevented from occurring.

As described above, the imaging apparatus showing a specific example of the electronic apparatus according to an embodiment of the present invention is configured such that the insertion slot for the semiconductor memory medium such as a memory card is overlapped with the frame portion of the case of the display unit, and so the display unit can prevent the semiconductor memory medium from moving. Accordingly, the back portion of the semiconductor memory medium is brought in contact with the frame portion of the display unit in the case of the user closing the display unit by mistake in a state where the semiconductor memory medium is not fully inserted up to a predetermined position, and therefore the possibility of damaging the flat panel by the back portion can be eliminated.

An embodiment of the present invention is not limited to the embodiment described above and shown in the drawings, but various alterations and modifications are possible without departing from the scope and spirit of the present invention. In the above-described embodiment, an example of application to a digital video camera is explained as a specific example of the imaging apparatus, for example. However, it is obvious that an embodiment of the present invention can be applied to an analogue video camera and further to an electronic still camera, a personal computer, an electronic dictionary, a mobile phone unit, and various kinds of other electronic apparatuses as long as the electronic apparatus includes a display unit. In addition, the electronic apparatus is configured such that part of a frame portion of the panel case in the display unit is overlapped with part of the storage medium insertion slot of the electronic apparatus in the above-described embodiment, but it should be appreciated that the electronic apparatus may be configured such that the whole storage medium insertion slot is covered with the frame portion.

It should be understood by those skilled in the art that various modifications, combinations, sub-combinations and alterations may occur depending on design requirements and other factors insofar as they are within the scope of the appended claims or the equivalents thereof.

## Claims

1. An electronic apparatus comprising
an apparatus body having a storage medium insertion slot to insert and remove an information storage medium; and
a display unit supported by said apparatus body in a turnable manner, being capable of opening and closing said storage medium insertion slot, wherein:
said display unit includes a flat panel capable of displaying image information, and a panel case having a window to expose a display surface of said flat panel and being supported by said apparatus body in a turnable manner; and
part of a frame portion surrounding said window of said panel case is disposed to overlap at least part of said storage medium insertion slot such that the information storage medium inserted through said storage medium insertion slot is prevented from being in contact with the display surface of said flat panel, in the case where said display unit is brought into contact with said apparatus body.

2. An electronic apparatus according to claim 1, wherein
a push-push mechanism, with which mounting operation and removing operation of the information storage medium are alternately executed by repeatedly pushing said information storage medium, is provided in a storage medium storing portion disposed inside said storage medium insertion slot.

3. An electronic apparatus according to claim 1, wherein
the storage medium storing portion being disposed inside said storage medium insertion slot is provided to extend in a direction approximately vertical to a surface, where said storage medium insertion slot is provided, of said apparatus body.

4. An electronic apparatus according to claim 1, wherein
a connector to electrically connect to peripheral devices is disposed in said apparatus body inside a portion surrounded by said frame portion of said panel case.
